# EUROPÄISCHE PATENTSCHRIFT

(11) **EP 2 553 280 B1**
(45) Veröffentlichungstag und Bekanntmachung des Hinweises auf die Patenterteilung: **07.01.2015**
(21) Anmeldenummer: 11712184.8
(22) Anmeldetag: 01.04.2011
(51) Int. Cl.: F16C 13/00, B29C 70/38

(54) **ANDRUCKROLLENEINHEIT ZUM ABLEGEN VORIMPRÄGNIERTER FASERBÄNDER AUF EINER OBERFLÄCHE SOWIE ABLEGEEINRICHTUNG**
PRESS ROLLER UNIT FOR LAYING OUT PRE-IMPREGNATED FIBER WEBS ON A SURFACE, AND LAYOUT DEVICE
UNITÉ ROULEAU PRESSEUR POUR APPLIQUER DES BANDES DE FIBRES PRÉIMPRÉGNÉES SUR UNE SURFACE, ET DISPOSITIF D'APPLICATION

(30) Priorität: 02.04.2010 US 320347 P; 02.04.2010 DE 102010013711
(43) Veröffentlichungstag der Anmeldung: 06.02.2013
(73) Patentinhaber: Airbus Operations GmbH, 21129 Hamburg (DE)
(72) Erfinder: GENSSEN, Marcel, 08525 Plauen (DE)
(74) Vertreter: Maiwald Patentanwalts GmbH
(86) Internationale Anmeldenummer: PCT/EP2011/001664
(87) Internationale Veröffentlichungsnummer: WO 2011/120718

(56) Entgegenhaltungen:
- FR-A1- 2 539 122
- US-A- 4 292 108
- US-A- 5 011 563
- US-A- 5 454 897
- US-A- 5 562 788
- US-A1- 2008 000 576

## Beschreibung

Die Erfindung betrifft eine Andruckrolleneinheit zum Ablegen von Faserbändern auf einer Oberfläche mit einer in einer Halterung um eine Achse drehbar gelagerten Andruckrolle.

Im Leichtbau, insbesondere im Flugzeugbau und in der Raumfahrt, werden für verschiedenste Konstruktionskomponenten zunehmend faserverstärkte Verbundbauteile eingesetzt, die aufgrund ihrer hohen Festigkeit bei einer zugleich geringen Masse ein hohes Gewichtseinsparungspotenzial aufweisen.

Die Ausrichtung der Verstärkungsfasern im Verbundbauteil hat dabei einen entscheidenden Einfluss auf die mechanischen Eigenschaften, wie zum Beispiel die Steifigkeit und die Lasttragfähigkeit. Die Verstärkungsfasern sollten im Idealfall der maßgeblichen Belastungsrichtung des Bauteils folgen, keine Welligkeit aufweisen und möglichst gleichmäßigen mechanischen Lasten ausgesetzt sein.

Eine Möglichkeit das vorstehende Anforderungsprofil umzusetzen, bietet das so genannte TFP-Verfahren ("Tailored Fiber Placement"). Hierbei werden mit einem thermoplastischen oder mit einem duroplastischen Kunststoffmaterial vorimprägnierte, mit Verstärkungsfasern armierte Faserbänder mit einer Breite zwischen 5 mm und 20 cm vorzugsweise mittels einer robotergeführten Andruckrolle entlang von vorgegebenen Bahnkurven auf einer formgebenden Unterlage (Werkzeug) abgelegt. Der Legeprozess wird bevorzugt automatisiert solange wiederholt, bis der sich sukzessiv aufbauende TFP-Rohling die gewünschte Sollgeometrie und Materialstärke erreicht hat. Der automatisierte Legeprozess erlaubt die zuverlässige Reproduzierbarkeit der geometrischen Abmessungen der herzustellenden Faserverbundbauteile in großen Stückzahlen bei zugleich geringen Herstellungskosten. Das Ablegen der herstellerseitig bereits vorimprägnierten Faserbänder (s.g. "Prepreg"-Bänder) erfolgt bevorzugt entlang von Bahnkurven, die den kraftflussgerechten Verlauf der Verstärkungsfasern im fertigen Bauteil sicher stellen. Mithilfe einer festen Andruckrolle können die Faserbänder jedoch nur auf ebenen oder geringfügig gekrümmten Werkzeugoberflächen abgelegt und an diese angedrückt werden. Die Ablage eines Faserbandes auf stärker ein- oder zweidimensional gekrümmten Werkzeugoberflächen erfordert hingegen den Einsatz einer elastischen Andruckrolle, die unbeschadet ihrer Elastizität auch noch bei höheren Temperaturen über eine hinreichende Formstabilität verfügen muss.

In Abhängigkeit von dem zur Matrixbildung eingesetzten Kunststoffmaterial erfolgt die Weiterverarbeitung des Bauteils nach dem Abschluss des Legeprozesses. Sind die Faserbänder beispielsweise mit einem aushärtbaren, duroplastischen Kunststoffmaterial, wie zum Beispiel einem Epoxidharz, gebildet, so erfolgt in der Regel eine Aushärtung des Rohlings unter Anwendung von Druck und/oder Temperatur, um das Verbundbauteil fertigzustellen. Mit einem thermoplastischen Kunststoffmaterial imprägnierte Faserbänder erfordern bereits während des Ablageprozesses hohe Temperaturen von bis zu 450 °C, um die Faserbänder hinreichend flexibel zu halten. Nach dem Abschluss des TFP-Legeprozesses sind im Fall von thermoplastischen Faserbändern keine weiteren Verarbeitungsschritte mehr vorzunehmen, es genügt vielmehr eine aktive oder passive Abkühlung des Rohlings bis auf Raumtemperatur.

Die WO98/42991A1 offenbart eine Andruckrolle für Textilmaschinen, die mit einer elastischen Beschichtung versehen ist. Die für den TFP-Prozess erforderliche Elastizität der Andruckrolle wird allein durch die Beschichtung bewirkt, so dass die Andruckrolle insbesondere für örtlich stärker gekrümmte Werkzeuge ungeeignet ist.

Aus der EP0441114A1 ist ferner eine Anordnung von zwei elastischen Rollen, die mit einer Beschichtung im *µ*m-Bereich versehen sind, bekannt. Derartige Rollen kommen zum Beispiel in Fotokopiergeräten in der Tonerfixiereinheit zum Einsatz. Aufgrund der geringen Materialstärke der Beschichtung sind auch diese Rollen für das Ablegen und Andrücken von Faserbändern auf stärker gekrümmten Werkzeugoberflächen nicht geeignet.

Die EP0625735A1 betrifft eine elastische Fixerrolle mit einem elastischen Rollenkörper und einer Antihaftummantelung. Der Rollenkörper ist mit einem Gummischaumkunststoff gebildet, während die Ummantelung mit PTFE und mit Silikongummi aufgebaut ist. Die Elastizität dieser Fixerrolle ist zur Kompensation größerer Änderungen in einem Höhenprofil eines für den TFP-Prozess benutzten Werkzeugs nicht ausreichend,

Die US5011563A zeigt eine Bandlegemaschine zur Herstellung von Verbundstrukturen mit einer Vielzahl von einzeln ansteuerbaren Rollensegmenten einer Andruckrolle. Zudem zeigt die ein federvorgespanntes Laufrad zum Vorspannen eines der Rollensegmente. Die FR2539122A1 zeigt ebenfalls eine Bandlegemaschine zur Herstellung von Verbundstrukturen mit einer Vielzahl von einzeln ansteuerbaren Rollensegmenten einer Andruckrolle. Die US5454897A zeigt auch eine Bandlegemaschine zur Herstellung von Verbundstrukturen mit einer Vielzahl von einzeln ansteuerbaren Rollensegmenten einer Andruckrolle. Ein mittiges Rollensegment ist in Hubrichtung lagefixiert. Die Vorspannung der Rollensegmente wird über ein, sich über mehrere Rollensegmente erstreckendes Druckluftkissen aufgebracht. Die Rollensegmente können mit einer elastischen Ummantelung versehen sein. Die US4292108A zeigt ebenfalls eine Bandlegemaschine zur Herstellung von Verbundstrukturen mit einer Vielzahl von einzeln ansteuerbaren Rollensegmenten einer Andruckrolle. Die Vorspannung der Rollensegmente erfolgt jeweils mittels eines federvorgespannten Laufrades. Die US2008/000576A1 zeigt ebenfalls eine Bandlegemaschine zur Herstellung von Verbundstrukturen mit einer Vielzahl von einzeln ansteuerbaren Rollensegmenten einer Andruckrolle. Die Rollensegmente sind mit einer elastischen Ummantelung versehen. Die US5562788A betrifft eine elastische Andruckrolle in einem Kopiergerät. Die DE3727462A1 zeigt eine Bandlegemaschine zur Herstellung von Verbundstrukturen mit einer Vielzahl von einzeln ansteuerbaren Rollensegmenten einer Andruckrolle. Die US4750965A offenbart eine Bandlegemaschine zur Herstellung von Verbundstrukturen mit einer Vielzahl von einzeln ansteuerbaren Rollensegmenten einer Andruckrolle. Die DE2753272A1 zeigt eine Anlegerolle zum Anlegen von Materialstreifen zur Herstellung von Fahrzeugreifen mit einzeln ansteuerbaren Scheibenelementen. Die DE3641973A1 zeigt eine Schweißvorrichtung mit einer Andruckrolleneinheit, deren Rollen einzeln ansteuerbar sind.

Aufgabe der Erfindung ist es daher, eine bevorzugt automatisiert führbare Andruckrolleneinheit zum Ablegen von Faserbändern im TFP-Prozess zu schaffen, die auch auf Formwerkzeugen mit einer stärkeren lokalen Krümmung einsetzbar ist und die zudem Temperaturen von bis zu 450 °C standhält.

Die erfindungsgemäße Aufgabe wird zunächst durch eine Andruckrolleneinheit mit den Merkmalen des Patentanspruchs 1 gelöst.

Dadurch, dass die Andruckrolle in eine Vielzahl von nebeneinander angeordneten Rollensegmente unterteilt ist, die jeweils in der Halterung verschiebbar gelagert sind, kann die Andruckrolle bevorzugt automatisiert mittels eines Handhabungsgerätes, insbesondere eines Roboterarms, eines Portalroboters oder eines Knickarmroboters, auch auf einer bereichsweise kleine Krümmungsradien aufweisenden Werkzeugoberfläche auf einfache Art und Weise geführt werden. Die mittels der Andruckrolleneinheit im Zuge des TFP-Prozesses abzulegenden Faserbänder können wahlweise eine thermoplastische oder duroplastische Matrix aufweisen. Als Verstärkungsfasern in den Faserbändern können zum Beispiel Kohlefasern, Aramid^{®}-Fasern, Kevlarfasern^{®}, Glasfasern oder Naturfasern zum Einsatz kommen. Die Rollensegmente sind in der Verschieberichtung federnd gelagert, wobei die Rollensegmente einzeln über jeweils eine Vorandruckeinheit federnd gelagert sind. Die Vorandruckeinheiten haben jeweils ein federvorgespanntes Laufrad, das auf einem Außenumfang der Rollensegmente abrollt.

Infolge der federnden Lagerung der Rollensegmente ist eine zu jedem Zeitpunkt definierte Andruckkraft gegeben. Ein Abheben der einzelnen Rollensegmente von der Werkzeugoberfläche bzw. dem abgelegten Faserband wird hierdurch unter nahezu allen Betriebsbedingungen verhindert. In Folge der indirekten Beaufschlagung der Rollensegmente mit der gewünschten Federkraft durch die jeweils auf den Rollensegmenten abrollenden Vorandruckeinheiten ergibt sich ein konstraktiv einfacherer Aufbau der Rollensegmente. Zugleich verringert sich die Gefahr einer Anhaftung von Kunststoffresten auf den Faserbändern an den Federn, die das Einfedern der Rollensegmente behindern könnten. Dadurch, dass die Vorandruckeinheiten jeweils ein federvorgespanntes Laufrad haben, das auf einem Außenumfang der Rollensegmente abrollt, ist ein leichtgängiges Abrollen der Rollensegmente auf der Werkzeugoberfläche bei einer zugleich gegebenen federnden vertikalen Höhenausgleichsmöglichkeit der einzelnen Rollensegmente gewährleistet, so dass ein optimales Ablegeund Andruckergebnis auch bei lokal stärker ein- und/oder zweidimensional gekrümmten Werkzeugoberflächen erreichbar ist.

Bei einer vorteilhaften Weiterbildung der Andruckrolleneinheit sind die Rollensegmente orthogonal zu einer Vorschubbewegung verschiebbar gelagert.

Hierdurch können auch stärker gekrümmte Bereiche der Werkzeugoberfläche von der Andruckrolle aufgrund deren Höhenausgleichsfähigkeit ohne eine nennenswerte Erhöhung der Widerstandskraft überfahren werden. Eine sofortige Bahnkorrektur des die Andruckrolleneinheit führenden Roboterarms, zum Beispiel durch das Anheben der Andruckrollen beim Auftreten eines Anstiegs in der Werkzeugoberfläche, ist in der Regel entbehrlich.

Nach Maßgabe einer weiteren Fortbildung der Andruckrolleneinheit verfügen die Rollensegmente jeweils über eine in einer Verschieberichtung verlaufende Längsnut zur Aufnahme der Achse.

Hierdurch ist die individuelle Beweglichkeit der Rollensegmente in vertikaler Richtung gewährleistet.

Eine weitere vorteilhafte Ausgestaltung sieht vor, dass die Achse zwei in der Verschieberichtung verlaufende, voneinander abgewandte Gleitflächen zur Führung der Rollensegmente hat.

Hierdurch ist eine leichtgängige vertikale Führung der Längsnuten der einzelnen Rollensegmente auf der Achse, die eine rechteckförmige Querschnittsgeometrie aufweist, gegeben.

Eine weitere vorteilhafte Ausgestaltung der Andruckrolleneinheit sieht vor, dass die Halterung ein U-förmiges Profil mit zwei Schenkeln ist, zwischen denen die Rollensegmente drehbar gelagert sind, und die eine Traverse aufweist.

Die Traverse verbindet die oberen Enden der Schenkel und erlaubt die mechanische Anbindbarkeit der Andruckrolleneinheit an unterschiedliche automatisierte Handhabungsgeräte, insbesondere einen Roboterarm, einen Knickarmroboter, einen Portalroboter oder dergleichen.

Gemäß einer Fortentwicklung sind die Rollensegmente jeweils zumindest abschnittsweise mit einer elastischen Ummantelung versehen.

Dies ermöglicht den Ausgleich von geringfügigen vertikalen Höhenschwankungen in der Oberflächengeometrie des Werkzeugs, die im Bereich von bis zu einigen 100 *µ*m liegen. Als Ummantelung kann zum Beispiel ein hinreichend temperaturfestes Silikonelastomer zum Einsatz kommen. Zugleich verringert sich hierdurch die Gefahr von Anhaftungen von Kunststoffmaterial aus dem Faserband.

Darüber hinaus wird eine Ablegeeinrichtung zum Ablegen von Faserbändern auf einer Oberfläche mittels eines Roboterarms zum Führen mindestens einer erfindungsgemäßen Andruckrolleneinheit in der Vorschubrichtung gezeigt.

Die solchermaßen ausgeführte Ablegeeinrichtung erlaubt das sicher reproduzierbare automatisierte Ablegen von Faserbändern auch auf lokal stärker gekrümmten Werkzeugoberflächen zur Schaffung von integralen Faserverbundbauteilen mit einer komplexen Oberflächengeometrie bei zugleich geringen Herstellungskosten.

In der Zeichnung zeigt:
- Fig. 1: eine perspektivische Ansicht der erfindungsgemäßen Andruckrolleneinheit,
- Fig. 2: eine Schnittdarstellung entlang der Linie II-II durch die Andruckrolleneinheit gemäß Fig. 1,
- Fig. 3: eine schematische Darstellung der Funktionsweise der Andruckrolleneinheit anhand eines Rollensegmentes mit Laufrolle, und
- Fig. 4: eine Prinzipdarstellung einer Ablegeeinrichtung mit einer an einem Roboterarm geführten, erfindungsgemäß ausgestalteten Andruckrolleneinheit.

In den Zeichnungen weisen dieselben konstruktiven Elemente jeweils dieselbe Bezugsziffer auf.

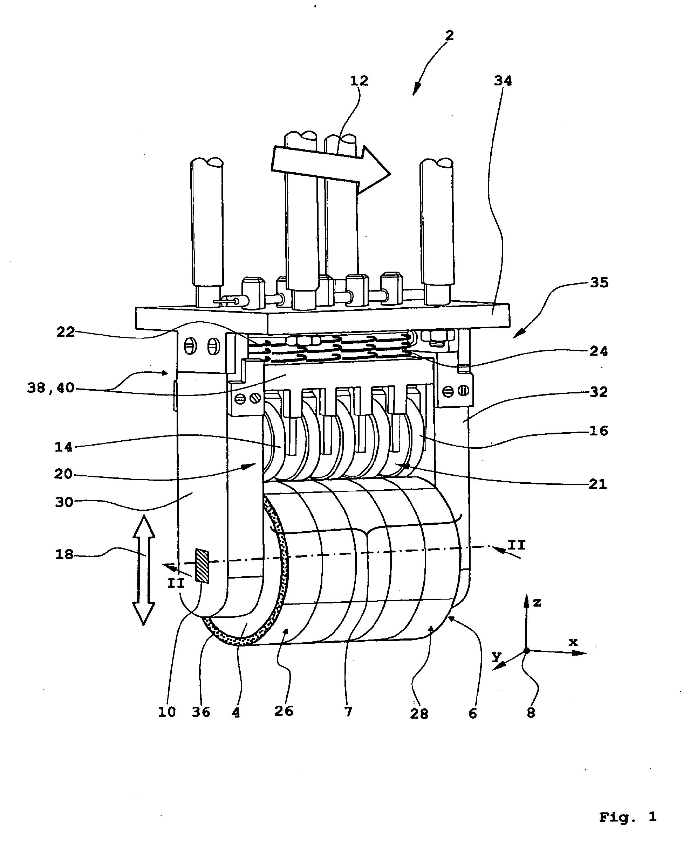

Die Fig. 1 illustriert eine perspektivische Ansicht der erfindungsgemäßen Andruckrolleneinheit.

Eine Andruckrolleneinheit 2 zur Ablage von Faserbändern auf einer gekrümmten Oberfläche eines Werkzeugs umfaßt unter anderem eine Vielzahl von Rollensegmenten, von denen der besseren zeichnerischen Übersicht lediglich die Rollensegmente 4,6 mit einer Bezugsziffer versehen sind. Die in Fig. 1 gezeigten fünf Rollensegmente bilden in ihrer Gesamtheit eine walzenförmige, Andruckrolle 7 mit einer Breite zwischen 10 mm und 20 cm. Ein Koordinatensystem 8 dient zur Veranschaulichung der räumlichen Lage der Komponenten. Die Rollensegmente 4,6 sind auf einer Achse 10 mit einer angenähert rechteckförmigen Querschnittsgeometrie jeweils für sich drehbar aufgenommen. Während des Ablegeprozesses eines nicht dargestellten Faserbandes bewegt sich die Andruckrolleneinheit 2 in einer Vorschubrichtung 12, das heißt parallel zur Richtung der x-Achse des Koordinatensystems 8. Somit verläuft die Verschieberichtung 18 orthogonal zur Vorschubbewegung 12. Erfindungsgemäß sind oberhalb der Rollensegmente jeweils Laufräder, von denen die beiden äußeren Laufräder die Bezugsziffern 14,16 tragen, angeordnet. Sämtliche Laufräder sind jeweils parallel zur z-Achse des Koordinatensystems 8, das heißt in einer Verschieberichtung 18 federnd in der Andruckrolleneinheit 2 aufgenommen, um lokale Höhenunterschiede einer in Fig. 1 nicht dargestellten Oberfläche eines Werkzeugs, die als Ablagefläche für die im TFP-Prozess abzulegenden Faserbänder dient, zu kompensieren. Die Laufräder 14,16 sind Teil einer Vorandruckeinheit 20,21. Dasselbe gilt für alle weiteren nicht mit einer Bezugsziffer versehenen Laufräder, die ebenfalls Bestandteile weiterer Vorandruckeinheiten sind. Für jedes Laufrad jeder Vorandruckeinheit ist jeweils eine Druckfeder, von denen die beiden äußeren Druckfedern repräsentativ für alle übrigen die Bezugsziffer 22,24 tragen, vorhanden. Während des Ablegeprozesses rollen die Laufräder 14,16 der Vorandruckeinheiten über den jeweiligen Umfangsflächen der Rollensegmente ab. Beispielsweise wälzen sich die Laufräder 14,16 während des Ablegeprozesses auf den Umfangsflächen 26, 28 der Rollensegmente 4,6 ab und können zugleich in der Verschieberichtung 18 um einen Betrag von beispielsweise bis zu 10 mm einfedern und hierdurch Höhenunterschiede aufgrund von stärkeren lokalen Krümmungsänderungen einer Werkzeugoberfläche kompensieren. Durch die Druckfedern 22,24 werden zugleich die Rollensegmente 4,6 mit einer definierten Anpresskraft an das abgelegte Faserband bzw. die Werkzeugoberfläche gedrückt und ein Abheben der Rollensegmente 4,6 verhindert.

Die Andruckrolleneinheit 2 umfasst weiterhin zwei U-förmig bzw. gabelförmig angeordnete Schenkel 30,32, deren obere Enden über eine Traverse 34 miteinander verbunden sind und die in ihrer Gesamtheit eine Halterung 35 darstellen. Mittels der Halterung 35 erfolgt die Anbindung der Andruckrolleneinheit 2 an einen in Fig. 1 nicht dargestellten Roboterarm, um das automatisierte Führen der Andruckrolleneinheit 2 über die Werkzeugoberfläche während des Legeprozesses der Faserbänder zu ermöglichen. Die Anbindung erfolgt bevorzugt mittels einer standardisierten mechanischen Schnittstelle, die eine schnelle Umrüstung und die Anbringung der Andruckrolleneinheit 2 an eine Vielzahl standardisierter Handhabungseinrichtungen erlaubt. Die Umfangsflächen der Rollensegmente 4,6 können zumindest bereichsweise mit einer elastischen Beschichtung bzw. Ummantelung 36, beispielsweise mit einem hochtemperaturfesten Silikonelastomer, beschichtet sein, um geringfügige Höhenunterschiede in der Verschieberichtung 18 bzw. der z-Achse des Koordinatensystems 8 auszugleichen und darüber hinaus eine Anhaftung von Kunststoffresten aus der Matrix des Faserbandes zu verhindern.

Unterhalb der Traverse 34 ist im Bereich einer nicht bezeichneten Vorder- bzw. Rückseite der Andruckrolleneinheit 2 jeweils ein Kamm 38,40 angeordnet. Die Kämme 38,40 verlaufen parallel zur darüber liegenden Traverse 34. Jeder der Kämme 38,40 verfügt über eine Vielzahl von rechteckförmigen, jeweils nach unten gerichteten, nicht mit einer Bezugsziffer versehenen Finger, die jeweils in einen Leerraum zwischen zwei benachbarten Laufrädern hineinragen. Zwischen den Fingern der Kämme 38,40 befindet sich jeweils eine nicht bezeichnete rechteckförmige Ausnehmung. Im gezeigten Ausführungsbeispiel verfügt die Andruckrolleneinheit 2 über fünf Rollensegmente 4,6, auf denen fünf jeweils mit einer Druckfeder federnd gelagerte Laufräder 14,16 der Vorandruckeinheiten 20,21 abrollen, so dass die Kämme 38,40 hier jeweils vier rechteckförmige Finger aufweisen.

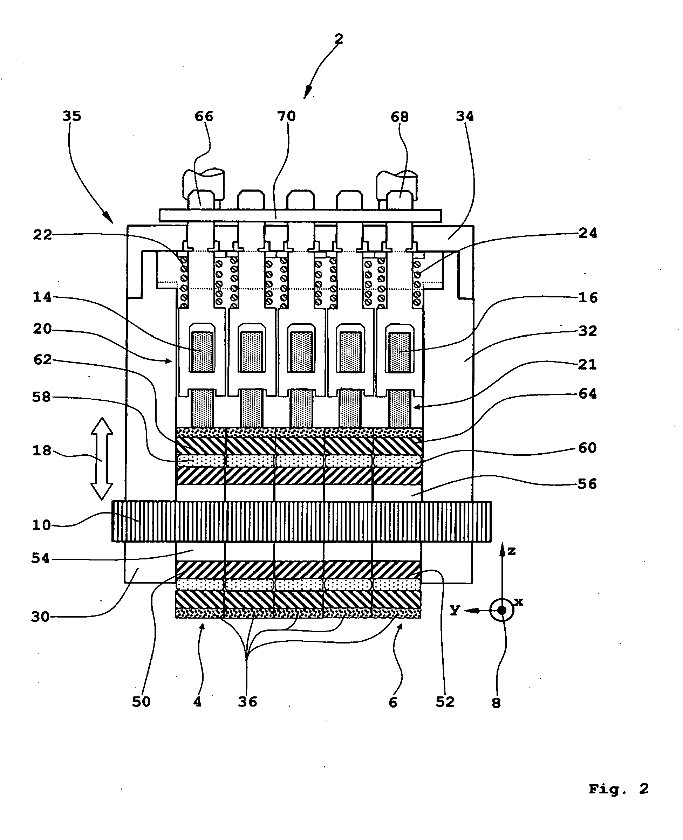

Die Fig. 2 zeigt die Andruckrolleneinheit 2 aus Fig. 1 in einer schematischen Schnittdarstellung entlang der Schnittlinie II-II. Das Koordinatensystem 8 veranschaulicht wiederum die Lage aller Komponenten im Raum.

Die Achse 10 ist zwischen den Schenkeln 30,32 feststehend aufgenommen. Die Rollensegmente 4,6 sind in der Verschiebeeinrichtung 18, das heißt parallel zu z-Achse verschiebbar und ihrerseits drehbar auf der Achse 10 gelagert. Um diese doppelte Funktionalität der mechanischen Beweglichkeit zu erreichen, verfügen alle Rollensegmente 4,6 jeweils über eine angenähert scheibenförmige Innennabe 50,52 mit jeweils einer Längsnut 54,56. Die Längsnut 54, 56 verläuft parallel zur z-Achse. Die Innennaben 50,52 sind im gezeigten Ausführungsbeispiel jeweils über ein gedichtetes Radiallager 58,60 in einer gleichfalls scheibenförmigen Außennabe 62,64 der Rollensegmente 4,6 und somit frei um die Achse 10 drehbar aufgenommen, während die Innennaben 50,52 der Rollensegmente 4,6 in der Verschieberichtung 18 auf der rechteckförmigen Achse 10 aufgrund der Längsnuten 54,56 um einen Längenbetrag von bis zu 10 mm ein- und ausfedern können, sich aber nicht verdrehen können.

Auf den Rollensegmenten 4,6 rollen hierbei jeweils die unterhalb der Traverse 34 angeordneten Laufräder 14,16 der Andruckrolleneinheiten 20,21 ab, die mittels der Druckfedern 22,24 mit einer vordefinierten Andruckkraft die Rollensegmente 4,6 entgegen der z-Richtung des Koordinatensystems 8 drücken. Hierdurch wird eine exakt einstellbare Andruckkraft aller Rollensegmente auf die abgelegten Faserbänder bzw. die darunter befindliche Werkzeugoberfläche erzielt.

Die vorstehend gemachten Ausführungen gelten entsprechend für die weiteren drei zwischen den Rollensegmenten 4,6 befindlichen Rollensegmente und den zwischen den Laufrädern 14,16 der Vorandruckeinheiten 20,21 befindlichen weiteren drei Laufräder. Die Druckfedern 22,24 sind auf Achsen 66,68 mit bevorzugt kreisförmigem Querschnitt aufgenommen, die in der die beiden Schenkel 30, 32 verbindenden Traverse 34 geführt sind. Die Schenkel 30,32 bilden mit der Traverse 34 eine U-förmige bzw. gabelförmige Halterung 35 für die Rollensegmente sowie die Laufräder.

Demzufolge können die auf der Achse 10 drehbar gelagerten Rollensegmente jeweils für sich unabhängig voneinander in der Richtung der z-Achse des Koordinatensystems 8 um beispielsweise bis zu 10 mm aus der in der Fig. 2 gezeigten Position in Richtung der Traverse 34 einfedern und sich zugleich hierbei drehen. Infolge dieser Ausgestaltung ist eine optimale Anpassbarkeit der Andruckrolleneinheit 2 an eine bereichsweise in mindestens einer Raumrichtung stärker gekrümmte Werkzeugoberfläche gegeben, wobei zugleich eine exakt definierte Anpresskraft auf das abgelegte Faserband wirkt.

Die vertikale Lagesicherung der Hochachsen 66,68 erfolgt mittels eines diese parallel zur y-Achse durch nicht bezeichnete Querachsenbohrungen der Hochachsen geführten Querstiftes 70. Die Druckfedern 22,24 stützen sich nach oben hin auf nicht näher bezeichneten Scheiben ab, die wiederum auf den Achsen 66,68 geführt und nach oben hin an der Traverse 34 abgefangen sind. In der Darstellung der Fig. 2 entspricht die Orientierung der x-Achse der Vorschubbewegung 12 der Andruckrolleneinheit 2. Alternativ können auch die Laufräder der Vorschubeinheiten zumindest bereichsweise mit einer Beschichtung gleicher Art wie die Ummantelung 36 der Rollensegmente versehen sein.

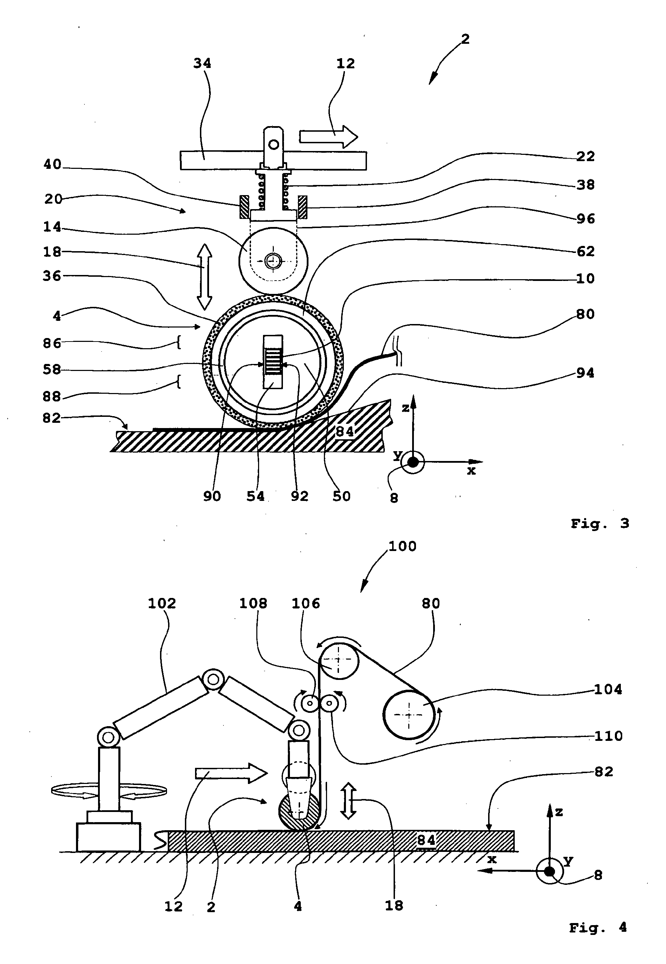

Die Fig. 3 illustriert in einer schematischen Darstellung die Funktionsweise der Andruckrolleneinheit anhand eines isolierten Rollensegmentes mit zugehöriger Vorandruckeinheit mit Laufrad beim Ablegen eines Faserbandes. Das Koordinatensystem 8 verdeutlicht erneut die Lage der Komponenten im Raum.

Das Rollensegment 4 der Andruckrolleneinheit 2 rollt mit seiner Ummantelung 36 auf einem Faserband 80 in Richtung der Vorschubbewegung 12 (parallel zur x-Achse) ab und legt hierbei das Faserband 80 auf einer Oberfläche 82 eines zumindest eindimensional gekrümmten Werkzeugs 84 ab. Hierbei wälzt sich zugleich das Laufrad 14 der Vorandruckeinheit 20 gegenläufig auf dem Rollensegment 4 federnd ab, so dass eine Möglichkeit zum Höhenausgleich in der Verschieberichtung 18 (parallel zur z-Achse) besteht. Durch die entsprechende Wahl einer Federhärte der Druckfeder 22 läßt sich die Andruckkraft, mit der das Laufrad 14 auf das Rollensegment 4 und damit auf das Faserband 80 bzw. die Oberfläche 82 des Werkzeugs 84 drückt, in weiten Grenzen präzise an die Verarbeitungsparameter des Faserbandes 80 anpassen. Das Laufrad 14 kann sich in der in Fig. 3 gezeigten, mittleren (Vertikal)-Position jeweils um die Höhenbeträge 86, 88 in Richtung der z-Achse oder in die entgegengesetzte Richtung federnd bewegen. Diese vertikale Höhenausgleichsmöglichkeit wird dadurch ermöglicht, dass in die Innennabe 50 des Rollensegmentes 4 eine Längsnut 54 eingelassen ist, die auf der Achse 10 entsprechend vertikal verschiebbar ist. Zwischen der Innennabe 50 und der Außennabe 62 des Rollensegmentes 4 befindet sich das bevorzugt vollständig abgedichtete Radiallager 58, um gleichzeitig die freie Rotation des Rollensegmentes 4 um die Achse 10 zu gewährleisten. Die Abdichtung des Radiallagers 58 ist im Allgemeinen notwendig, um eine Kontamination mit dem zur Imprägnierung des Faserbandes 80 benutzten Kunststoffmaterials zu verhindern. Weiterhin kann es erforderlich sein, nicht dargestellte Abstreifer vorzusehen, um etwaiges, auf der Ummantelung 36 anhaftendes Kunststoffmaterial zu entfernen. Zur möglichst präzisen und im Idealfall spiel- und zwischenraumfreien Führung des Rollensegmentes 4 auf der Achse 10 verfügt diese über zwei voneinander abgewandt angeordnete Gleitflächen 90,92, die zumindest bereichsweise mit einer Antihaftbeschichtung ausgestattet sein können. Alternativ oder zusätzlich können auch Längsflächen der Längsnuten 54,56 mit einer Antihaftbeschichtung versehen sein. Die über die Traverse 34 miteinander verbundenen Schenkel (vgl. Fig. 1,2) der Halterung sind in der Darstellung der Fig. 3 der besseren zeichnerischen Übersicht halber nicht dargestellt. Der Darstellung der Fig. 3 ist jedoch entnehmbar, dass die Kämme 38,40 senkrecht zur Zeichenebene, das heißt parallel zur y-Achse des Koordinatensystems 8 verlaufen.

Infolge dieser Konstruktion ist es zum Beispiel möglich, die Andruckrolleneinheit 2 nahezu widerstandsfrei auch über einen stärkeren Anstieg 94 (Krümmung) der Oberfläche 82 des Werkzeugs 84 zu führen, ohne dass beispielsweise die vertikale Raumposition eines hier nicht dargestellten Roboterarms zur automatisierten Führung der Andruckrolleneinheit 2 in seiner vertikalen Position zur Verhinderung einer zu großen mechanischen Belastung unverzüglich nach oben korrigiert werden müßte, wodurch sich der zur Lagekontrolle des Roboterarms erforderliche Steuerungs- und/oder Regelungsaufwand verringert. Die Lagerung des Laufrades 14 in der Vorandruckeinheit 20 erfolgt mittels einer mit gestrichelter Linie angedeuteten Lagergabel 96 unter Verwendung eines Radiallagers. Dieser Aufbau entspricht dem konstruktiven Aufbau aller weiteren Vorandruckeinheiten.

Die Fig. 4 zeigt eine automatisierte Ablegeeinrichtung zur Durchführung des TFP-Verfahrens unter Einsatz der erfindungsgemäßen Andruckrolleneinheit.

Das Koordinatensystem 8 dient zur Veranschaulichung der Komponenten im Raum. Eine Ablegeeinrichtung 100 umfasst unter anderem eine Andruckrolleneinheit 2, die am Ende eines Roboterarms 102 befestigt ist. Anstelle des Roboterarms 102 kann jeder beliebige Knickarm- oder Portalroboter zur Führung der Andruckrolleneinheit 2 Verwendung finden. Der Roboterarm 102 erlaubt eine freie Positionierung der Andruckrolleneinheit 2 im Raum in Bezug zur Oberfläche 82 des Werkzeugs 84. Mittels der am Roboterarm 102 befestigten Andruckrolleneinheit 2 wird das Faserband 80 auf der Oberfläche 82 abgelegt und mit einer definierten Andruckkraft, die entgegen der z-Achse des Koordinatensystems 8 wirkt, angedrückt. Das Faserband 80 wird auf einer Vorratsrolle 104 vorgehalten, über eine Umlenkrolle 106 geführt und anschließend mittels zwei gegenläufiger Walzen 108,110 weiter transportiert und der Andruckrolleneinheit 2 zugeführt. Während des Ablegeprozesses bewegt sich die vom Roboterarm 102 geführte Andruckrolleneinheit 2 zum Beispiel in der Bewegungsrichtung 12, das heißt parallel zur x-Achse. Es ist jedoch auch möglich, die Vorratsrolle 104, das Fördersystem 106, 108, 110 und die Andruckrolleneinheit 2 ortsfest zu positionieren und stattdessen das Werkzeug 84 zu bewegen. Hierbei können sich die einzelnen Rollensegmente individuell um einen Absolutbetrag von bis zu 10 mm vertikal federnd in der Verschiebrichtung 18 bewegen. Hierdurch kann das Faserband 80 auch auf bereichsweise stärker gekrümmten Oberflächen 82 des Werkzeugs 84 nahezu widerstandslos und zugleich verwerfungsfrei bzw. faltenfrei abgelegt werden.

Das Faserband 80 bzw. das so genannte Prepreg-Bandmaterial ist bevorzugt mit Kohlefasern armiert, die wahlweise in eine Künststoffmatrix aus einem thermoplastischen oder duroplastischen Kunststoffmaterial eingebettet sind. Alternativ können auch beliebige organische und/oder anorganische Verstärkungsfasern zum Einsatz kommen, solange eine vorgegebene mechanische Belastbarkeit des im TFP-Prozess gefertigten Verbundbauteils gegeben ist. Im Falle einer thermoplastischen Harzmatrix kann es - in Abhängigkeit von den spezifischen Materialeigenschaften des thermoplastischen Kunststoffes - erforderlich sein das Faserband 80, bis auf eine Temperatur von 450 °C aufzuheizen, beispielsweise durch einen Laserstrahl, um dessen Flexibilität und Handhabbarkeit während des TFP-Prozesses sicherzustellen. Dementsprechend müssen die Andruckrolleneinheit 2 einschließlich aller zur Führung bzw. Umlenkung des Faserbandes 80 eingesetzten Rollen und Walzen über eine ausreichende Temperaturfestigkeit verfügen.

**Bezugszeichenliste**

| | | | |
|---|---|---|---|
| 2. | Andruckrolleneinheit | | |
| 4. | Rollensegment | | |
| 6. | Rollensegment | | |
| 7. | Andruckrolle | | |
| 8. | Koordinatensystem | | |
| 10. | Achse (rechteckige Querschnittsgeometrie) | | |
| 12. | Vorschubbewegung | | |
| 14. | Laufrad | | |
| 16. | Laufrad | | |
| 18. | Verschieberichtung (Höhenausgleich) | | |
| 20. | Vorandruckeinheit | | |
| 21. | Vorandruckeinheit | | |
| 22. | Druckfeder | | |
| 24. | Druckfeder | | |
| 26. | Umfangsfläche (Rollensegmente) | | |
| 28. | Umfangsfläche (Rollensegment) | | |
| 30. | Schenkel | | |
| 32. | Schenkel | | |
| 34. | Traverse | | |
| 35. | Halterung | | |
| 36. | Ummantelung (Beschichtung) | | |
| 38. | Kamm | | |
| 40. | Kamm | | |
| 50. | Innennabe | 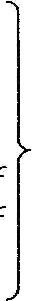 | Rollensegmente |
| 52. | Innennabe | | |
| 54. | Längsnut | | |
| 56. | Längsnut | | |
| 58. | Radiallager | | |
| 60. | Radiallager | | |
| 62. | Außennabe | | |
| 64. | Außennabe | | |
| 66. | Hochachse (Druckfeder Laufrolle) | | |
| 68. | Hochachse (Druckfeder Laufrolle | | |
| 70. | Querstift | | |
| 80. | Faserband | | |
| 82. | Oberfläche | | |
| 84. | Werkzeug | | |
| 86. | Höhenbetrag | | |
| 88. | Höhenbetrag | | |
| 90. | Gleitfläche | 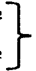 | Achse |
| 92. | Gleitfläche | | |
| 94. | Anstieg | | |
| 100. | Ablegeeinrichtung | | |
| 102. | Roboterarm | | |
| 104. | Vorratsrolle | | |
| 106. | Umlenkrolle | | |
| 108. | Walze | | |
| 110. | Walze | | |

## Patentansprüche

1. Andruckrolleneinheit (2) zum Ablegen von Faserbändern (80) auf einer Oberfläche (82) mit einer in einer Halterung (35) um eine Achse (10) drehbar gelagerten Andruckrolle (7), wobei die Andruckrolle (7) in eine Vielzahl von nebeneinander angeordneten Rollensegmente (4,6) unterteilt ist, die jeweils in der Halterung (35) verschiebbar gelagert sind, **dadurch gekennzeichnet, dass** die Rollensegmente (4,6) in Verschieberichtung (18) einzeln über jeweils eine Vorandruckeinheit (20,21) federnd gelagert sind, wobei die Rollensegmente (4,6) durch die jeweils auf den Rollensegmenten (4,6) abrollenden Vorandruckeinheiten (20,21) indirekt mit einer gewünschten Federkraft beaufschlagt sind, wobei die Vorandruckeinheiten (20,21) jeweils ein federvorgespanntes Laufrad (14,16) haben, das auf einer Umfangsfläche (26,28) der Rollensegmente (4,6) abrollt, wobei für jedes Laufrad (14,16) jeder Vorandruckeinheit (20,21) jeweils eine Druckfeder (22,24) vorhanden ist, und wobei die Rollensegmente (4,6) jeweils zumindest abschnittsweise mit einer elastischen Ummantelung (36) versehen sind.

2. Andruckrolleneinheit (2) nach Anspruch 1, wobei die Rollensegmente (4,6) orthogonal zu einer Vorschubbewegung (12) verschiebbar gelagert sind.

3. Andruckrolleneinheit (2) nach Anspruch 2, wobei die Rollensegmente (4,6) jeweils eine in einer Verschieberichtung (18) verlaufende Längsnut (54,56) zur Aufnahme der Achse (10) haben.

4. Andruckrolleneinheit (2) nach Anspruch 3, wobei die Achse (10) zwei in der Verschieberichtung (18) verlaufende, voneinander abgewandte Gleitflächen (90,92) zur Führung der Rollensegmente (4,6) hat.

5. Andruckrolleneinheit (2) nach einem der vorhergehenden Ansprüche, wobei die Halterung (35) ein U-förmiges Profil mit zwei Schenkeln (30,32) ist, zwischen denen die Rollensegmente (4,6) gelagert sind, und eine Traverse (34) aufweist, an der die Vorandruckeinheiten (20,21) abgestützt sind.

## Claims

1. A pressure application roller unit (2) for the laying down of fibre strips (80) on a surface (82), with a pressure application roller (7) mounted in a mounting unit (35) such that it can rotate about a shaft (10), wherein the pressure application roller (7) is subdivided into a multiplicity of roller segments (4, 6) arranged next to one another, which in each case are mounted in the mounting unit (35) such that they can be displaced, **characterized in that** the roller segments (4, 6) are individually spring-mounted in the displacement direction (18), in each case via an initial pressure application unit (20, 21), wherein the roller segments (4, 6) are exposed indirectly to a desired spring force by the initial pressure application units (20, 21) rolling on the roller segments (4, 6) in each case, wherein the initial application units (20, 21) in each case have a wheel (14, 16) that is pre-loaded by a spring, which wheel rolls on a peripheral surface (26, 28) of the roller segments (4, 6), wherein for each wheel (14, 16) of each initial pressure application unit (20, 21) respectively one compression spring (22, 24) is provided, and wherein the roller segments (4, 6) are provided in each case with an elastic sleeve (36), at least in some sections.

2. The pressure application roller unit (2) according to claim 1, wherein the roller segments (4, 6) are mounted such that they can be displaced orthogonally with respect to a feed movement (12).

3. The pressure application roller unit (2) according to claim 2, wherein the roller segments (4, 6) in each case have a longitudinal groove (54, 56) running in a displacement direction (18) for accommodating the shaft (10).

4. The pressure application roller unit (2) according to claim 3, wherein the shaft (10) has two sliding surfaces (90, 92) running in the displacement direction (18), facing away from one another, for guiding the roller segments (4, 6).

5. The pressure application roller unit (2) according to any one of the preceding claims, wherein the mounting unit (35) has a U-shaped profile with two arms (30, 32), between which the roller segments (4, 6) are mounted, and has a cross-beam (34), on which the initial pressure application units (20, 21) are supported.

## Revendications

1. Unité à rouleau presseur (2) pour l'application de bandes fibreuses (80) sur une surface (82) à l'aide d'un rouleau presseur (7) s'appuyant en rotation dans un support (35) autour d'un axe (10), dans laquelle le rouleau presseur (7) est divisé en une multitude de segments de rouleau (4, 6) juxtaposés qui s'appuient respectivement de manière mobile dans le support (35), **caractérisée en ce que** les segments de rouleau (4, 6) sont individuellement en appui élastique dans le sens de déplacement (18) respectivement via une unité de pré-pression (20, 21), les segments de rouleau (4, 6) étant sollicités indirectement via les unités de pré-pression (20, 21) roulant respectivement sur les segments de rouleau (4, 6) par une force de ressort souhaitée, les unités de pré-pression (20, 21) présentant respectivement une roue précontrainte par ressort (14, 16) qui roule sur une surface circonférentielle (26, 28) des segments de rouleau (4, 6), un ressort de compression (22, 24) étant disponible pour chaque roue (14, 16) de chaque unité de pré-pression (20, 21) et les segments de rouleau (4, 6) étant pourvus respectivement du moins par sections d'un chemisage élastique (36).

2. Unité à rouleau presseur (2) selon la revendication 1, dans laquelle les segments de rouleau (4, 6) s'appuient orthogonalement de manière mobile pour exécuter un mouvement d'avancement (12).

3. Unité à rouleau presseur (2) selon la revendication 2, dans laquelle les segments de rouleau (4, 6) comportent respectivement une rainure longitudinale (54, 56) s'étendant dans un sens de déplacement (18) et destinée à recevoir l'axe (10).

4. Unité à rouleau presseur (2) selon la revendication 3, dans laquelle l'axe (10) présente deux surfaces de glissement (90, 92) s'étendant dans le sens de déplacement (18) et détournées l'une de l'autre pour guider les segments de rouleau (4, 6).

5. Unité à rouleau presseur (2) selon une des revendications précédentes, dans laquelle le support (35) est un profilé en forme de U doté de deux branches (30, 32) entre lesquelles les segments de rouleau (4, 6) s'appuient et présente une traverse (34) par laquelle les unités de pré-pression (20, 21) sont soutenues.
